(19) Europäisches Patentamt
European Patent Office
Office européen des brevets

(11) **EP 3 368 397 B1**

(12) **EUROPEAN PATENT SPECIFICATION**

(45) Date of publication and mention
of the grant of the patent:
**25.11.2020 Bulletin 2020/48**

(51) Int Cl.:
**B62D 35/00** $^{(2006.01)}$      **F15D 1/10** $^{(2006.01)}$

(21) Application number: **16788777.7**

(22) Date of filing: **31.10.2016**

(86) International application number:
**PCT/GB2016/053364**

(87) International publication number:
**WO 2017/072530 (04.05.2017 Gazette 2017/18)**

(54) **DRAG REDUCTION METHOD**

WIDERSTANDSREDUZIERUNGSVERFAHREN

PROCÉDÉ DE RÉDUCTION DE TRAINÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.10.2015 GB 201519156**

(43) Date of publication of application:
**05.09.2018 Bulletin 2018/36**

(73) Proprietor: **Imperial College Innovations Limited London SW7 2AZ (GB)**

(72) Inventors:
• **MORRISON, Jonathan**
  **London**
  **Greater London SW7 2AZ (GB)**
• **RIGAS, Georgios**
  **Mesolongi 30200 (GR)**

• **DE LA CRUZ LOPEZ, Juan Marcos Garcia**
  **03005 , Alicante(AUCANTE) (ES)**
• **BRACKSTON, Rowan David**
  **London**
  **SE26 6AR (GB)**
• **WYNN, Andrew**
  **London**
  **Greater London SW7 2AZ (GB)**

(74) Representative: **Howson, Richard Giles Bentham et al**
  **Kilburn & Strode LLP**
  **Lacon London**
  **84 Theobalds Road**
  **London WC1X 8NL (GB)**

(56) References cited:
  **FR-A1- 2 862 269      KR-A- 20040 025 022**
  **US-A1- 2010 106 380**

## Description

## FIELD

The present disclosure relates to a drag reduction method and a drag reduction apparatus.

## BACKGROUND

Many vehicles, usually road vehicles, are designed in a particularly aerodynamically inefficient fashion: their shape often contains a blunt-edged rear end, which is the result of legal and operational but also aesthetic constraints. This is the case for a number of different vehicle types, for example heavy-duty vehicles, trucks, large road vehicles (LRV), vans, minivans, compact cars, city cars, SUV, MPV, station wagons or off-roaders.

From an aerodynamic perspective a blunt end of a "bluff" body, such as a vehicle, is highly inefficient: it generates a wake, which can dissipate as much as 25% of the total energy produced by the engine. Improving the aerodynamic efficiency in vehicles is paramount for environmental, economic and practical reasons. Last year, road transport produced 7bn tonnes $CO_2$ by using 3tn litres of fuel at a cost of $3- 6tn. Also, for the emerging industry of electric cars, an improvement in aerodynamic efficiency is related with an increment in range, helping to overcome "range anxiety".

The relevance of improving the aerodynamic efficiency of vehicles is now universally accepted and many companies and brands provide different solutions. It is gradually becoming more common to see Large Road Vehicles using fairings, diffusers or boat tails but also, most modern car manufacturers such as Audi, Porsche, Volkswagen or Renault include in their designs relatively large spoilers (up to 20% of the vehicle height) to control the vehicle wake.

It is the intention of this disclosure to contribute to improving the aerodynamic efficiency of vehicles using a technology characterised by its small geometric impact, in comparison with other technologies currently present in the market. In particular, the technology can be regarded as a small, but crucial, modification of the spoilers currently used in some vehicles, so it will effectively not add any extra geometric feature to the current designs. In other applications, such as for vehicles which do not use spoilers, the disclosure can provide improved aerodynamic efficiency by the addition of a drag reducing apparatus to a bluff body.

KR2004/0025022 discloses a drag reducing device is used for a carrier having the box type rear part for loading such as a truck or a bus with the fixed separation point, and composed of a vibrating apparatus having a vibration surface vibrating up and down or right and left around the fixed separation point such as a rear corner of the carrier. The vibrating apparatus comprises a piezoelectric ceramic actuator having a piezoelectric ceramic oscillator installed in the rear corner of the carrier, a blade contacted to the piezoelectric ceramic oscillator and amplified and oscillated by vibration of the end, and a control unit applying alternating current to the piezoelectric ceramic oscillator to vibrate the piezoelectric ceramic oscillator.

Document US 2010/0106380 A1 discloses a drag reduction apparatus according to the preamble of claim 1.

## SUMMARY

According to a first aspect, there is provided a drag reduction apparatus as defined in claim 1.

Advantageously, by moving the control surfaces it is possible to modify the aerodynamic forces and moments over a body so as to reduce characteristics of the flow of fluid, such as air, that contribute to drag experienced by a bluff body.

By providing control surfaces configured to move with respect to the bluff body, it is possible to reduce drag whilst minimising the impact of the geometric design of the body. For example, where the body is a vehicle that has a spoiler, it is possible to implement the control surfaces without significantly affecting the design of the vehicle. Furthermore, the control surfaces can be readily coupled to bluff bodies the need to significantly re-design or modify the body. Multiple control elements may be provided which may be moved independently.

By oscillating the control surfaces, it is possible to reduce the drag experienced by controlling the fluid flow over the bluff body.

The drag reduction apparatus may further comprise one or more actuators configured to cause the one more or more control surfaces to oscillate with respect to the bluff body.

By providing actuators it is possible to have greater control over the position and frequency of oscillation of the one or more control surfaces, thereby allowing greater control over the reduction of the flow characteristics that give rise to drag.

The drag reduction apparatus further comprises a processor configured to execute a control algorithm so as to generate at least one control signal for controlling the oscillation of the one or more control surfaces.

By providing a control algorithm that generates a control signal, it is possible to control the control surfaces in a manner which is flexible and repeatable.

Each control signal comprises a first signal component having at least one frequency component to control oscillation of the at least one control surface with respect to the bluff body; and a second signal component to control the mean position of the at least one control surface with respect to the bluff body.

By providing a first component and a second component, it is possible to independently control different aspects of the movement of the control surfaces. The second signal component is able to control the mean position of the control surface. For example, by changing the magnitude of the second signal component it is possible to apply an offset (e.g. a DC offset) to the control signal so as to modify the position of the control surface. Accordingly, it is possible to independently influence different characteristics of the flow.

The processor may be configured to generate a first control signal and a second control signal, wherein the first control signal and the second control signal are different, and wherein the first control signal is configured to control the oscillation of a first control surface and the second control signal is configured to control the oscillation of a second control surface.

By providing these features, it is possible to independently control each control surface to provide greater control over the flow of the wake. For example, it is possible to position adjacent control surfaces antisymmetrically or symmetrically. Advantageously, if the aspect ratio (W/H, here > 1) is reduced below 1 then the control surfaces to be used could be the top and bottom surfaces. Alternatively, any combination of sides, top, or bottom of the rear of the body could be utilised and independently controlled.

The at least one control signal may be a predetermined oscillatory pattern stored in memory.

Advantageously, it is possible to control the oscillations of the control surface in a simple and repeatable manner based on known and/or pre-determined characteristics of the flow.

The drag reduction apparatus may comprise at least one sensor configured to detect an environmental parameter, and wherein the control algorithm is configured to generate the at least one control signal based upon an output of the at least one sensor.

Advantageously, by adaptively generating the control signal based upon feedback relating to the characteristics of the flow at a particular moment in time. Accordingly, it is possible to control the control surfaces.

The at least one sensor may comprise a pressure sensor configured to determine pressure at the wake of the bluff body.

The at least one sensor may comprise at least one of: a sensor configured to determine the relative position of the at least one control surface, a sensor configured to measure the aerodynamic force on the at least one control surface, and a sensor configured to measure the drag experienced by the bluff body.

The at least one sensor may comprise at least one of: a force sensor; and a sensor configured to determine or measure a voltage and/or current at the actuator.

The bluff body may be a vehicle and wherein the at least one sensor comprises at least one of: a force sensor in a driving shaft of the vehicle; and a sensor configured to determine the fuel consumption of the vehicle.

The bluff body may be a vehicle, such as a road vehicle. For example, the vehicle may be one of a heavy-duty vehicle, a truck, a large road vehicle (LRV), a van, a minivan, a compact car, a city car, an SUV, an MPV, a station wagon or an off-roader vehicle.

According to a second aspect, there is provided a vehicle comprising the drag reduction apparatus of the first aspect of the invention.

This improvement has operational benefits for road transport vehicles such as in Large Road Vehicles or Heavy Duty Vehicles, since the drag reduction mechanism set out herein will reduce drag without affecting the protocol on load bays, in particular the process of parking, loading and unloading of vehicles.

This drag reduction mechanism may be produced with a minimal geometric modification and, in some cases, is able to make use of a geometric feature already existing in the vehicle, such as roof spoilers which are widely used.

The vehicle may comprise a plurality of pressure sensors positioned on the vehicle so as to measure pressure in the wake of the vehicle. The vehicle may comprise a plurality of control surfaces, each coupled to the vehicle at a rear of the vehicle so as to control the fluid flow at the wake of the vehicle.

According to a third aspect, there is provided a drag reduction method as defined in claim 9.

According to a fourth aspect, computer-readable medium comprising computer-readable instructions which, when executed by a processor, cause the processor to perform the method of third aspect.

The drag reduction approach presented herein has the advantage of delivering drag reduction with minimal interference on the body geometry of the bluff body.

This distinctive feature of minimal geometric modification is beneficial for a number of reasons. Specifically, the drag reduction approach set out in this application is beneficial over other technologies, since it can be installed on a vehicle or other bluff body within restrictive legal constraints on geometry.

The present disclosure aims to modify the aerodynamic forces and moments over a bluff body, such as a road vehicle, by oscillating control surfaces positioned towards the vehicle rear end of the bluff body in a movement pattern about a pivot point. For example, wherein the object is a vehicle, the rear end may be the end of the vehicle facing away from the direction of travel.

The present disclosure relates to reducing the aerodynamic drag. Nevertheless, the principles set forth in this disclosure may allow for control over the surfaces so that drag can be increased (to improve braking effectiveness) or the lateral forces can be varied (to help in turns, if necessary).

Drag is reduced specifically by interacting with the natural flow stable asymmetries (such as the bi-stability), the environmental flow asymmetries (such as cross-wind or any asymmetric operational configuration) and the quasi-periodic flow oscillations (such as vertical or horizontal vortex shedding).

At high speeds of fluid flow the wake of bluff bodies, such as vehicles, contributes to a large percentage of their aerodynamic drag and total energy consumption. Wakes are highly dissipative regions behind bodies moving within a fluid, characterised by high turbulence intensity and large coherent flow structures. The turbulence in wakes is sustained by several flow instability mechanisms that produce quasi-periodic or random oscillatory patterns in the fluid. Moreover, flow asymmetries, produced by the flow instabilities and by environmental asymmetries, increase the total enstrophy of the wake. Among these instabilities, the most widely known are vortex shedding, bistability, and shear layer.

By providing the claimed features, it is possible to control the vortex shedding and bistability, thereby reducing their intensity and additionally increasing the flow symmetry. In addition, the effect of environmental asymmetries can be reduced. As a result, the energy dissipated by the wake and the resulting aerodynamic drag is reduced. To achieve this, one or more control elements in the form of surfaces may be located at different positions on a bluff body, for example at the rear of the body with respect to the usual direction of travel of that body.

These control surfaces can be considered as dynamic because, unlike static spoilers, they are configured to move in position with respect to the body during use to reduce wake intensity and drag. In some arrangements, the control surfaces can be operated in open loop (without sensors), in closed loop (with sensors distributed around the body) or in a combination of open and closed loop.

In open loop, the control signal that produces the required motion of the control surfaces may be a predetermined oscillatory pattern, for example a pattern that may depend on the vehicle geometry and speed. In closed loop, the control signal is generated in real-time based on sensor information (giving an estimate of the state of the wake).

**BRIEF DESCRIPTION OF THE DRAWINGS**

Embodiments will be described below, by way of example only, with reference to the accompanying drawings, in which:

Figure 1 is an isometric view of a prior art bluff body;

Figure 2a and 2b are top views illustrating different features of the wake generated by the bluff body of Figure 1;

Figure 3 is an isometric view of an illustrative drag reduction apparatus coupled to a bluff body according to an example of the disclosure;

Figures 4a and 4b are top views illustrating the effect of the illustrative drag reduction apparatus on the different features of a wake generated by the bluff body of Figure 3;

Figures 5a to 5d illustrate a time history of control surface motion, centre of pressure, drag, and lateral forces acting on a bluff body before and after operating two laterally oriented control surfaces;

Figure 6 illustrates the probability density functions for the centre of pressure of the arrangement of Figure 5;

Figures 7a, 7b, and 7c illustrate a number of different arrangements of control surfaces and sensors on a bluff body;

Figure 8 illustrates an example actuator for use within a drag reduction apparatus of the present disclosure; and

Figure 9 illustrates another example actuator for use within a drag reduction apparatus of the present disclosure;

Figure 10 illustrates the effect of yaw angle in the bluff body of Figure 1 and control surface deflection angle on drag for a given yaw angle;

Figure 11 illustrates the average position and standard deviation of the base centre of pressure at a yaw angle of 2.5° at the different mean control surface offsets or deflections presented in Figure 12;

Figure 12 illustrates an example schematic of a control algorithm;

Figure 13 illustrates an example frequency response for transfer function G(s);

Figure 14 illustrates Bode plots for a simple proportional control algorithm and a modified control algorithm;

Figure 15 illustrates an example arrangement of the drag apparatus having an example sensing and actuation geometry;

Figure 16a shows a probability density function of wind speed at Heathrow airport;

Figure 16b shows the expected yaw angle at two highway speeds associated with the distribution shown in Figure 16a;

Figure 17 shows an experimental set-up including an Ahmed body of width W 216mm;

Figure 18a illustrates the drag in comparison to a baseline having no control surfaces at a zero yaw angle achieved by a bluff body having no control surfaces, by a bluff body having various symmetric arrangements of control surfaces optimised for given yaw angles and by a bluff body having adaptive control of the position of the control surfaces, the control surfaces having an extent of 9% of the vehicle width;

Figure 18b illustrates the data of Figure 18a in terms of the drag reduction achieved at different yaw angles by the different arrangements of control surfaces in comparison to a body having no control surfaces;

Figure 19a illustrates the drag in comparison to a baseline having no control surfaces at a zero yaw angle achieved by a bluff body having no control surfaces, by a bluff body having various symmetric arrangements of control surfaces optimised for given yaw angles and by a bluff body having adaptive control of the position of the control surfaces, the control surfaces having an extent of 13% of the vehicle width;

Figure 19b illustrates the data of Figure 19a in terms of the drag reduction achieved at different yaw angles by the different arrangements of control surfaces in comparison to a body having no control surfaces; and

Figure 20 shows the average drag saving percentage of five different flap positioning strategies weighted with yaw angle distribution obtained for Heathrow at vehicle speed 60mph or 70mph and flap lengths 9% and 13% of vehicle width.

## DETAILED DESCRIPTION

The following embodiments relate generally to a drag reduction apparatus and method.

Prior art

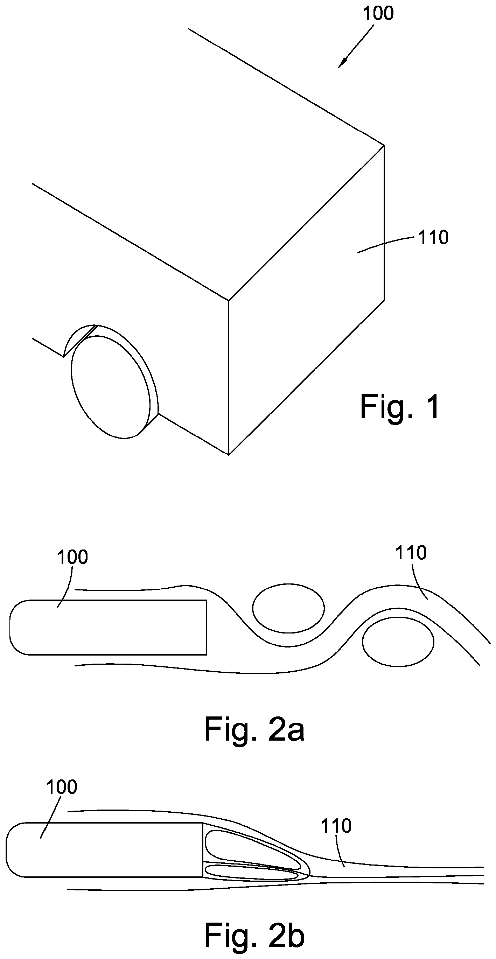

An isometric view of a prior art bluff body 100 having a blunt surface 110 is illustrated in Figure 1. Fluid flow over the body 100 results in a wake that has characteristics that contribute significantly to the drag effect on the body 100.

The principle by which the disclosed approach reduces drag in bluff bodies is by minimizing the kinetic energy transferred from the body to its wake, either due to stable base pressure asymmetries, which favour large scale fluid recirculation, therefore seeding vorticity to the wake, as illustrated in Figure 2b; or to quasi-periodic fluctuations, triggered by self-exciting fluid structures, as illustrated in Figure 2a. Different features of the wake generated by the bluff body of Figure 1 may occur simultaneously but are illustrated separately in Figures 2a and 2b, In particular Figure 2a exemplifies vortex shedding and Figure 2b exemplifies bistability.

Drag Reduction Apparatus

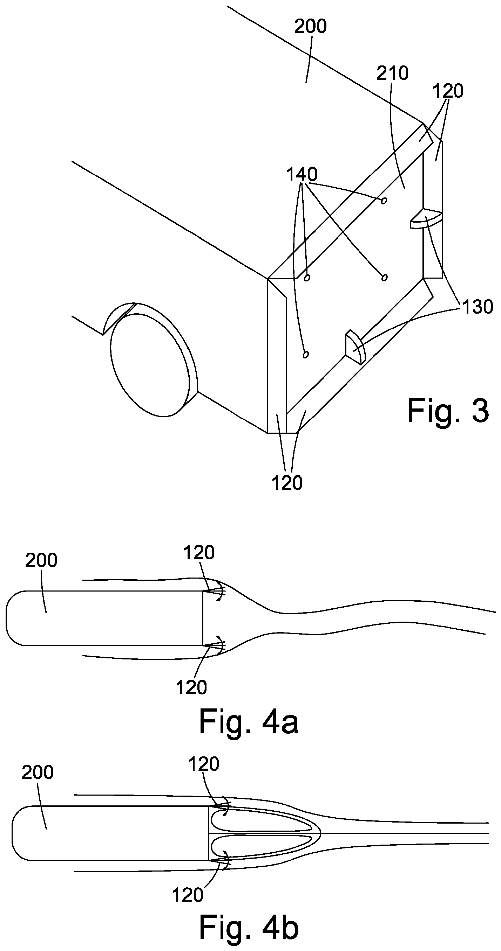

An example drag reduction apparatus of the present disclosure is illustrated in Figure 3 attached to a bluff body 200 near the blunt surface of the body. The drag reduction apparatus of Figure 3 comprises one or more control surfaces 120 positioned on a blunt surface 210 of the bluff body 200 towards the rear end of the body. The control surfaces 120 are flap-like surfaces each coupled to the body 200 and configured to move with respect to the body 200, for example with pivotal movement about a coupling point.

The control surfaces 120 of Figure 3 are each also coupled to an actuator 130. Each actuator 130 is configured to cause the coupled control surface 120 to move with respect to the body 200 based upon a control signal received by the actuator 130 from a processor (not shown). The control surfaces 120 may be positioned at the rear of the bluff body 200 for improved controllability. The control surfaces 120 may be moved independently.

In addition, the drag reduction apparatus in the example of Figure 3 is configured to comprise one or more sensors 140. The sensors 140 may be pressure sensors which are located on the rear surface of the body 200. The pressure sensors may be configured to obtain pressure measurements at the rear of the body 200 to estimate the state of the wake.

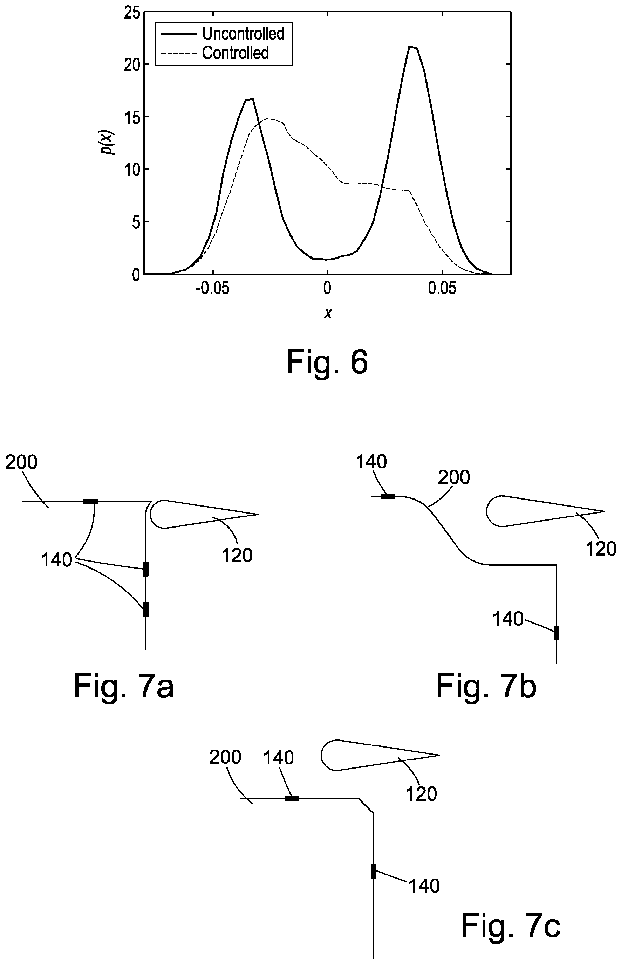

Different arrangements of control surfaces 120 and sensors 140 with respect to the rear of the body 200 are illustrated in Figures 7a to 7c.

Actuator

In order to maximize the energy saving provided by the drag reduction apparatus, it is important to maximize the efficiency of the actuators 130. As will be made clear, it is particularly advantageous to reduce the drag using a control signal including different components, namely a first component having at least one frequency component, such as a high frequency component to control the frequency of oscillation of the control surface, and a second component having configured to control the mean position of the control surface, where each component can be independently controlled.

For example, the second component of the control signal may include an offset which can be applied to the control signal to determine the mean position of the control surface during oscillation of the control surface. The offset of the second component may also be considered to define the resting position of the control surface where no first signal component is applied. By modifying the second component, it is possible to change the mean position of the control surface with respect to the body. In practice, the magnitude of the second component may slowly vary over time so as to control the wake. This variation of the second signal component will be described in detail later.

Accordingly, an actuator 130 may comprise a high frequency actuation element and a low frequency actuation element, for example a high frequency mass spring system with an additional low frequency actuator to modify in real time the mean offset position of each control surface 120.

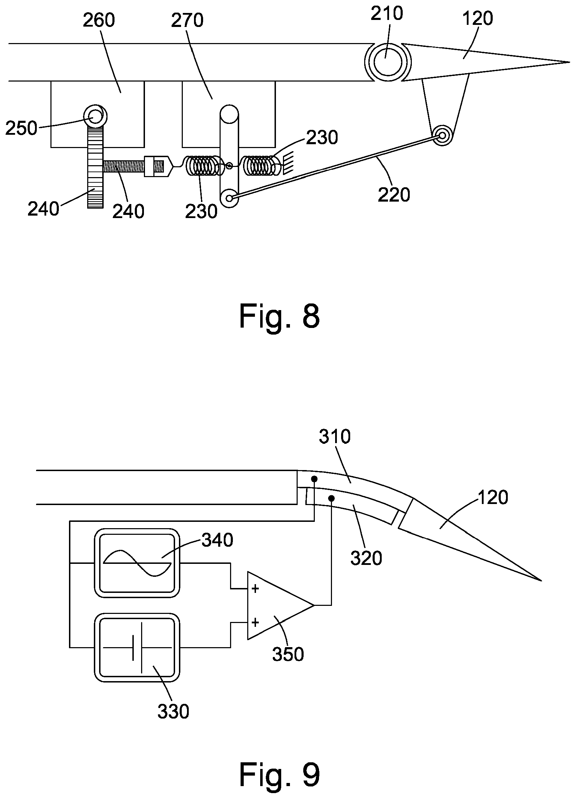

Figures 8 and 9 illustrate examples of actuators that are capable of efficiently providing such control over the control surfaces at low and high frequencies. The arrangement of Figure 8 uses a DC motor 270 connected with the control surface 120 and tuned springs 230 to produce oscillations of the desired frequency, in combination with a stepper motor 260 and gearbox 240, 250 to produce an offset. The arrangement of Figure 9 uses a piezo-ceramic 320 actuating an elastic hinge 310 and a signal combiner 350 configured to combine the high frequency signal with a DC offset.

Figure 8 illustrates an example of an actuator 130 which utilizes a first electromagnetic motor 260 and a second electromagnetic motor 270. The first motor 260 may be a stepper motor 260 configured to modify the offset of a spring-mass system directly connected with the control surface 120 via a rod 220 so as to rotate the control surface 120 about hinge 210. The stepper motor shaft is passed through a gearbox 240, 250 which ensures that the detent torque is enough to counteract the torque produced by springs 230, so as to minimize power expenditure when the offset of the control surface 120 is fixed. Accordingly, in the arrangement of Figure 8, the control signal has different components to control the first and second motors separately.

Figure 9 presents an example of an alternative actuator 130 in which the high frequency component of the control signal and the offset component of the control signal are combined and transmitted to a single piezo-ceramic actuator 320. In this arrangement, the control surface 120 is coupled to the body by an elastic hinge 310. The position of the control surface 120 with respect to the body 200 is set by an electrical control signal transmitted to the actuator 320. The control signal comprises an offset component provided by a powerless DC signal offset 330 and a high frequency component of the control signal is provided by a separate wave signal 340. The signals 340 and 330 are combined at a signal combiner 350 to form a combined control signal that causes the piezo-ceramic actuator 320 to alter the position of the control surface 120. In this case, the piezo-ceramic actuator 320 acts as a spring-hinge which can be tuned to have the desired resonant frequency in combination with the control surface 120.

The above illustrative actuators achieve a slowly varying offset with minimal power input and secondly use a resonant system to operate efficiently at higher frequencies.

Other actuator arrangements are envisaged, including combinations of the presented examples. For example, an actuator may include an electromechanical DC offset adjustment and a piezo-ceramic high frequency elastic hinge. In some arrangements, the components of the actuator may be re-arranged into other geometrical or mechanical arrangements. For example, the components may be fitted in series, inside an "active hinge" so as to improve robustness or practicality. In the examples set out above, the actuator 130 is a hinge, flexible coupling or some other means allowing movement of the control surface 120 with respect to the body 200. The actuators 130 driving the control surfaces 120 may be operated in response to a control signal generated based on real-time data obtained by one or more sensors 140 or by a pre-defined signal.

The one or more sensors 140 may be configured to measure one or more of a number of different environmental parameters, including base and lateral pressure, torque and position, and force over the vehicle or fuel consumption. The drag reduction apparatus may comprise a processor executing a control algorithm configured to receive the output of each of the one or more sensors 140 and to use the environmental information provided by the sensors 140 as part of the feedback control algorithm to generate a control signal for causing oscillation of the one or more control surfaces 120 in a manner that reduces drag.

Wake Asymmetry

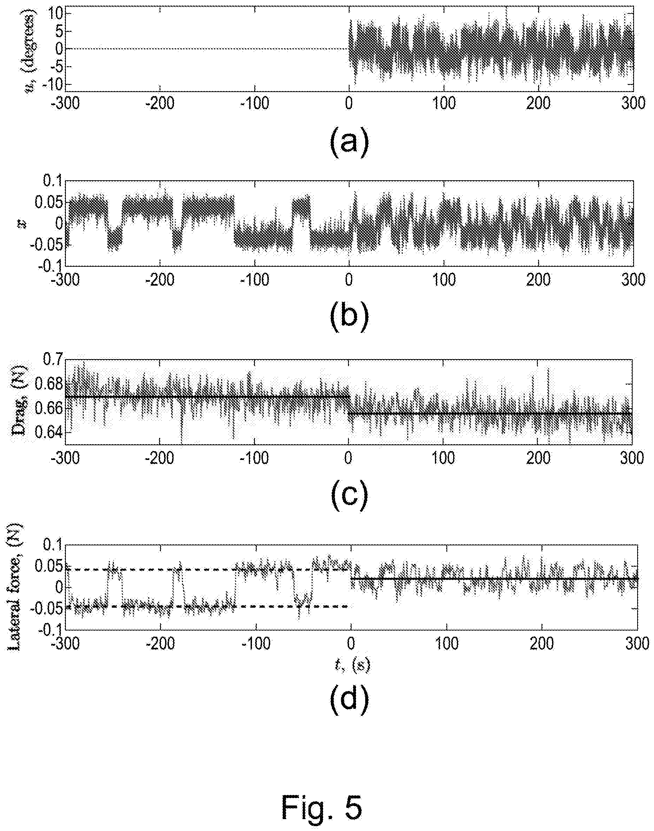

A number of different metrics may be used in order to characterise the asymmetry of the wake. In the example of Figure 5, the centre of pressure at the rear of the body is used to characterise the wake asymmetry.

Environmental Asymmetries

It is typical for bluff bodies, such as road vehicles, to operate at significant yaw angles with respect to the flow of fluid, which drastically increases the drag experienced. This is mainly due to the typical cross-winds experienced by these vehicles.

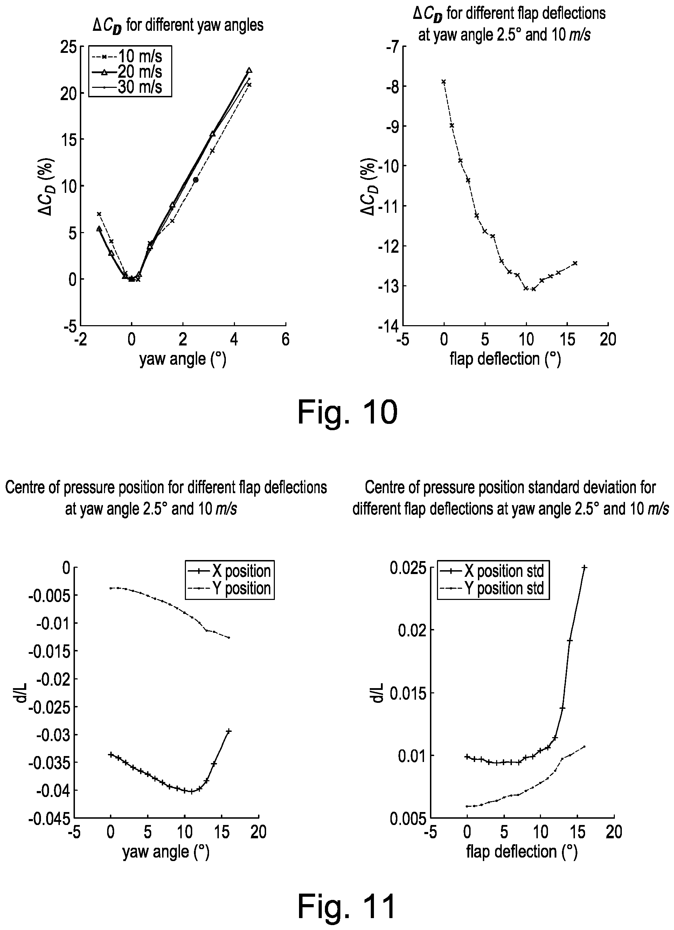

As an example, the average wind speed in the UK, about 5m/s, would produce a yaw angle of 10.6° in a truck driving at 60mph. This will increase the vehicle drag by more than 20%, as presented in the left graph of Figure 10. In addition, head winds modify the velocity profile so that the body faces away from the uniform expected for the zero-wind baseline and change their pitch, i.e. their vertical yaw angle. Other environmental asymmetries to be considered in the example of vehicles are road turns or vehicle operational asymmetries such as open windows or load asymmetries.

The inventors have recognised that modifying the mean position of the control surfaces 120 with respect to the body 200, for example by applying and/or adjusting an offset to a control signal that controls the position and movement of the control surfaces, can recover some of the base pressure lost due to these environmental asymmetries, thereby reducing the drag that they generate, as shown in the right graph of Figure 10. The combined effect of environmental asymmetries often varies over long time scales.

Therefore minimizing the resultant drag may involve an adaptive algorithm, which sets independently the position of each control surface 120 as a function of the real-time data acquired, including the mean position and/or the oscillation frequency. Figure 11 left presents the position of the base centre of pressure at a yaw angle of 2.5° and different mean control surface offsets or deflections.

It is noteworthy that, as observed comparing Figure 10 right and Figure 11 left, in the presence of environmental asymmetries the maximum drag reduction is not obtained by increasing the base pressure distribution symmetry.

Bi-stability

The bi-stability is a flow asymmetry naturally occurring in some symmetric geometries in the flow regimes typical of bluff bodies, for example road vehicles. The bi-stability implies that the wake rests in a stably asymmetric configuration for an indefinite amount of time, until some external disturbance repositions it into a different stable asymmetric position. In symmetric geometries, these two asymmetric configurations are mirror symmetric with respect to each other, and therefore symmetry is recovered in the long term statistics.

Because bi-stability restricts the maximum level of instantaneous symmetry that the flow field can naturally reach, it constrains the minimum drag attainable by a symmetric geometry. This phenomenon is exemplified by the plateau observed around 0 degrees in Figure 10 left. To reduce the drag generated by the asymmetry associated with the bi-stability, the drag reduction apparatus compels the wake to remain in an unstable configuration. In some arrangements, the drag reduction apparatus senses, in real-time, the wake position and operates a closed-loop feedback system to reposition the wake position.

In some arrangements, the drag reduction apparatus can suppress flow bi-stability by making use of sensors in the form of pressure sensors that measure pressure at the wake of the bluff body. The drag reduction apparatus can further comprise a control algorithm to determine the required control signal to be sent to the actuators 130 to control the position and oscillation of the control surfaces 120.

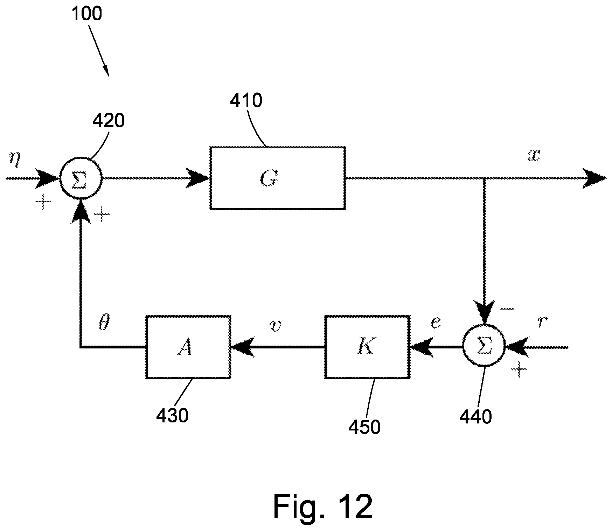

A schematic diagram illustrating an example schematic of a possible control algorithm 400 is set forth in Figure 12. In the arrangement of Figure 12, the wake is modelled by the transfer function G, the actuator by *A* and the controller by *K*. The controller may be designed to set the pressure metric x, for instance the centre of pressure, to the desired value of r. Further detail of these parameters is given later. Other control algorithms are envisaged.

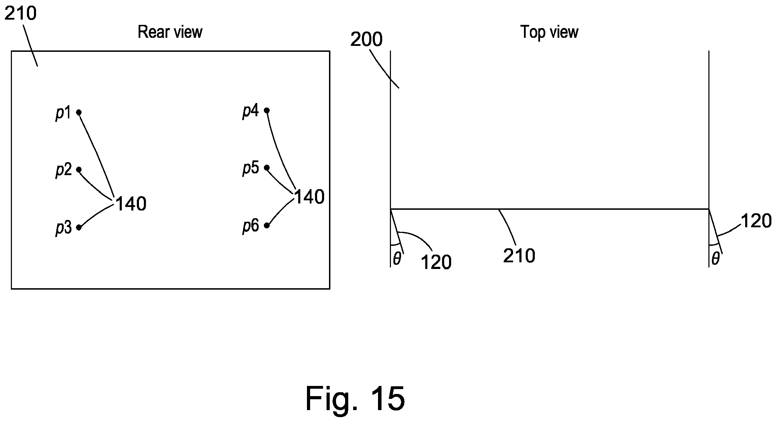

Figure 5 presents four graphs (a)-(d) illustrating an arrangement in which an example drag reduction apparatus comprising two lateral control elements is operated after about 300 s of fluid flow over the body (at t=0). Figure 5(a) illustrates the angle of the control elements relative to the body, as described in Figure 15, with respect to time. As can be seen, the control elements begin to oscillate at t=0. Figure 5(b) illustrates the horizontal position of the centre of pressure x which provides a measure of the base pressure asymmetry associated with the bistability of the wake. As observed in Figure 5(b), the motion of the control surface reduces the variation of asymmetry of the base pressure.

Figures 5(c) and (d) illustrate the drag and lateral forces acting on a bluff body before and after operating two laterally oriented control surfaces after a period of time (about 300 s). As observed, the control surfaces reduce the absolute value of the drag and lateral forces.

Figure 6 illustrates two probability density functions relating respectively to a "uncontrolled" arrangement, where the drag reduction apparatus is inactive, and an "controlled" arrangement, where the drag reduction apparatus is operated by oscillating the control surfaces. The "controlled" arrangement can be seen to have a more probable symmetric configuration than the "uncontrolled" arrangement. In particular, the centre of pressure is closer to the base centre. In the example of Figure 6, a 2% drag reduction was obtained.

The above experiments were implemented on an Ahmed body model (which is a modelled body representative of a generic car for scientific studies) with dimensions of 160 mm x 216 mm x 600 mm (approximately a 1:20 scale of a LRV or 1:10 scale of a SUV), at a wind speed of 10 m/s.

The maximum drag reduction obtained by oscillating 18 mm long flaps (8% of the body width) with amplitude smaller than 7° has been 2.0%. The power employed for this drag reduction has been less than 40% of the power saved. These results are particularly relevant and surprising since:

    1. The relative size of the control surfaces used is 60% of a typical static spoiler used by SUVs;
    2. the amplitude of the oscillation is small and it can be potentially produced by an elastic deformation without the need for hinges;
    3. the total energy balance is positive in an active experiment on Ahmed bodies;
    and
    4. the total fuel saving of this experimentation extrapolated to a LRV is around 0.5%. Current available technologies in the market start from 1% fuel saving.

Drag reduction of 2.0% has been achieved using two lateral control surfaces, which target a single instability mechanism of bistability using a non-optimised closed-loop control algorithm. The results highlight the capability of the described drag apparatus to control effectively and efficiently instability mechanisms observed in representative bluff bodies with blunt trailing edges, such as road vehicles.

In some arrangements, the drag reduction apparatus or method may operate in closed loop arrangement in which a control algorithm receives a signal from at least one sensor configured to determine at least one environmental parameter and then generates a control signal based on that output.

In some arrangements, a processor executing a control algorithm may receive pressure measurements obtained by a plurality of pressure sensors. The control algorithm may perform spatial averaging of pressure measurements from the pressure sensors. The flow features to be controlled are large scale but coexist alongside multiscale turbulence. It is therefore preferable to extract features of interest from noisy measurements. Averaged pressure statistics such as the Centre of Pressure location (CoP) or spatial mode projection give a single metric from multiple pressure measurements, thereby extracting relevant information.

In some arrangements, the control algorithm aims to achieve a desired value for the aforementioned average pressure metric. For the case of bi-stability control with zero cross-wind, it is desirable to maintain the CoP position at the centre of the base in order to achieve a symmetric wake. Under other conditions the optimal target value may be determined in real time based on knowledge of the flow conditions, or by using an extremum seeking algorithm.

In order to set the pressure metric to a target value, a negative feedback gain may be used in the control algorithm to drive the position of the control surfaces in the appropriate direction. In addition to this, a combination of frequency domain filters and compensators may be used in order to improve stability and suppress unwanted oscillations. The specific nature of the spatial averaging and controller may be determined based upon a combination of mathematical models for the wake and actuator, as well as empirical results from experiments.

Among the stable base pressure asymmetries the inventors have identified two main sources of drag: environmental fluctuations and wake bistability. The quasi-periodic wake oscillations targeted in the drag reduction apparatus are the vertical and horizontal vortex shedding. Further details for each of these drag sources is provided below.

The inventors have recognised that bi-stability can also occur in non-symmetric configurations, such as in the case of cross-wind or any other environmental asymmetries. In that case, the bi-stable solution will, once more, restrict the maximum drag reduction attained.

Figure 11, right, illustrates the appearance of the bi-stability in an asymmetric situation as the increment of the standard deviation in the lateral centre of pressure position at flap deflections over 10°. Reducing the drag further may require the use of a closed-loop system which positions the wake in a naturally unstable solution, just as in the case of the symmetric configuration.

### Vortex Shedding

The quasi-periodic wake fluctuations that the drag reduction approach aims to minimize in order to reduce drag are the vertical and horizontal vortex shedding.

Vortex shedding typically occurs when two opposing shear layers interact with each other to generate large scale flow structures which oscillate the wake in a quasi-periodic manner. The control of the vortex shedding requires identifying the phase of this process and operating the control surfaces in order to cancel the interaction between the two opposing shear layers, with a method akin to that employed to control the bi-stability. The typical frequencies that the control surfaces should operate to minimize these fluctuations are around the natural frequency expected for the vortex shedding, which is $f \sim 0.18U_\infty/L$, where $U_\infty$ is the frontal air speed, and L is the distance between the opposing shear layers: for a 2m wide truck driving at 55mph in a calm atmosphere, the typical frequency would be around 2Hz.

### System Modelling

The control algorithm $K$ requires careful design based upon a detailed understanding of both the flow and actuator, obtained through a combination of mathematical modelling and empirical results. The key process is to start from a nonlinear mathematical model of the flow and convert it into a linear time-invariant system suitable for standard control design. This process is detailed below.

The bi-stable feature of the flow can be described by Equation 1 below:

$$\dot{x} = \alpha x - \lambda x^3 + \eta$$

Here the variable x describes the size of the bi-stable mode, thus quantifying the asymmetry in the wake. The variables $\alpha$ and $\lambda$ are positive constants that respectively quantify the growth rate and saturation of the process. Finally $\eta$ represents the perturbations naturally arising from the turbulence within the flow. With the addition of controlling flaps at an angle $\theta$(t), $\dot{x}$ can be represented by Equation 2 below:

$$\dot{x} = \alpha x - \lambda x^3 + b\theta_{t-\tau} + \eta$$

Here b is a positive constant that scales the angle $\theta$ to the influence it has on the flow while $\tau$ represents the time delay between the operation and effect of the control surface. The term $\theta_{t-\tau}$ therefore represents the angle $\theta$ at a time $\tau$ seconds in the past.

The model outlined in Equation 2 is a nonlinear, time-delayed differential equation. In order to facilitate straightforward control design the model can be linearised and put into a standard transfer function format. The result of this is the below transfer function of Equation 3:

$$G(s) = \frac{\bar{x}}{\bar{\theta}} = \frac{b(2/\tau - s)}{(s - \alpha)(2/\tau + s)}$$

This transfer function is equivalent to a differential equation relating the angle of the control surface to the antisymmetric feature of the flow and is in an appropriate form for the application of standard control design methods.

System Identification

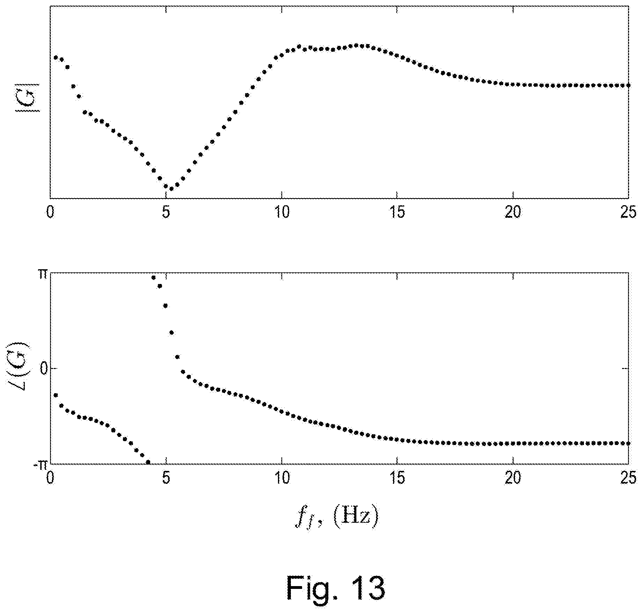

Given the transfer function of Equation 3, parameters are then identified. A standard method for doing this is to obtain a frequency response for the system defined by the transfer function by forcing at a number of discrete frequencies and observing the response. The frequency response of the system is shown in Figure 13.

Up to around 5Hz of Figure 13 is relevant to the bi-stability. The frequency response demonstrates that the control surfaces are able to induce flipping of the bistability within this range but that the response decays and becomes increasingly lagged as the frequency increases, until by 5Hz there is very little response. This cutoff frequency allows estimation of the parameter which is directly related to the timescale of the process. The magnitude of the response allows estimation of the gain b while the slope of the phase response allows estimation of the time delay $\tau$.

In addition to G(s), the transfer function A(s) describing the actuator dynamics is also required. This is obtained via the same method but by looking at the response between the voltage v applied to the actuator and the angle $\theta$.

Control Design

Given good models for G and *A,* the controller *K* can now be designed in order to stabilise G and set the pressure metric x to the desired value r.

Many methods are available for the design of such a control algorithm. One approach is to use a loop shaping approach, leading to a control algorithm that includes a proportional gain, a lead compensator and frequency domain filters. An example of a design process is detailed below.

One such approach is to evaluate the loop transfer function L(s) = A(s)K(s)G(s), choosing *K* in order to give *L* the desired properties. Analysis initially shows that a simple proportional gain may be sufficient. In order to improve the situation three key extra features may be optionally added in any combination:

- A lead compensator that adds derivative action to the control algorithm, with the effect that the phase lag of L(s) is reduced over a specific frequency range, which helps to improve stability.
- A notch filter to counteract the large resonant peak of the actuator, which can otherwise lead to unwanted oscillations in the closed loop system.
- Low pass filter to reduce electrical losses arising from high frequency noise components in the measurement signal x resulting from the turbulent nature of the flow.

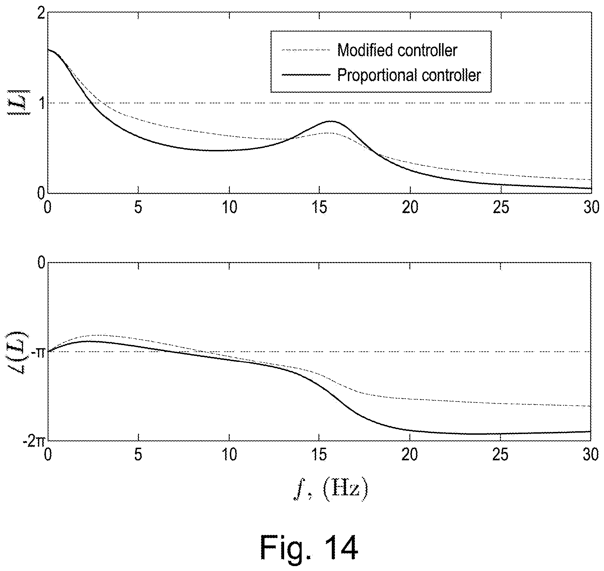

The specific properties of these three features are decided based upon their effect on L(s). Bode plots for a simple proportional control algorithm and a modified control algorithm are shown in Figure 14. The modified transfer function can be seen to have reduced the resonance at 16Hz and to have a larger phase margin at around 3Hz, a key property for the stability of the system.

Practical Implementation

One possible example implementation of the drag reduction apparatus is to implement a drag reduction apparatus which uses six pressure sensors 140 on the rear surface 210 of the body 200 and two control surfaces 210 located at the sides of the rear surface 210 as illustrated in Figure 15. The sensors 240 are evenly distributed across the rear surface of the body, as is illustrated in Figure 15 (left). The even distribution of the sensors allows for the measurements of the six pressure sensors to obtain the single pressure metric x. As will be appreciated, any number of pressure sensors could be used according to the following equation:

$$x = \frac{\sum_{i=1}^{N} p_i x_i}{\sum_{i=1}^{N} p_i}$$

In this way x quantifies the average pressure asymmetry over the base as the horizontal position of the centre of pressure, and by extension the level of asymmetry in the wake. For the case in which the model is aligned with the flow, the aim is to symmetrise the wake, in which case the target value r is chosen to be 0. In other arrangements, it will be appreciated that any number of pressure sensors may be used and other metrics may be used.

One option to modify the wake is that two control surfaces are moved together in an antisymmetric manner as shown in Figure 15 (right). This is achieved by supplying equal but opposite voltages v to the control surfaces using actuators. Other approaches may utilise independently actuated control surfaces in order to modify the wake, wherein different control signals are transmitted to each control surface.

In some arrangements it is possible to control the oscillation of the control surfaces without the need to calculate a control signal based upon signals received from one or more sensors using a control algorithm. For example, it is possible to pre-generate a control signal that is effective to control the oscillation of the control surfaces and store that signal, or parameters that enable that signal to be generated, in memory to be recalled by the processor as appropriate. The pre-generated control signal may be configured based upon a number of different factors, such as the expected fluid speed flow and direction, characteristics of the bluff body, such as the weight and dimensions of the body, and other characteristics obtained through simulation. In this way, the drag reduction apparatus operates in an open loop system that does not require feedback.

In some arrangements a partially closed loop system may be implemented, whereby a plurality of pre-generated signals are stored in memory and are selected from based upon one or more environmental parameters, for example speed of the fluid flow or speed of the vehicle. Furthermore, a pre-determined signal can be left depending on parameters that can be optimised in real-time by an extreme seeking algorithm.

Further analysis

Environmental asymmetries may encompass any geometrical vehicle-flow misalignment that, in a steady state, lead to an asymmetric optimal position of the aerodynamic surfaces for drag reduction. There are many possible sources of environmental asymmetries, among which the most common are vehicle operational asymmetries (such as open windows, protrusive objects or different load conditions) and weather asymmetries (such as cross wind or atmospheric boundary layer variations). Any of these situations will benefit from an adaptive motorized system capable to respond to the environment to maximize the drag reduction in each condition. As a case study, the effect of cross wind on a vehicle is presented hereafter.

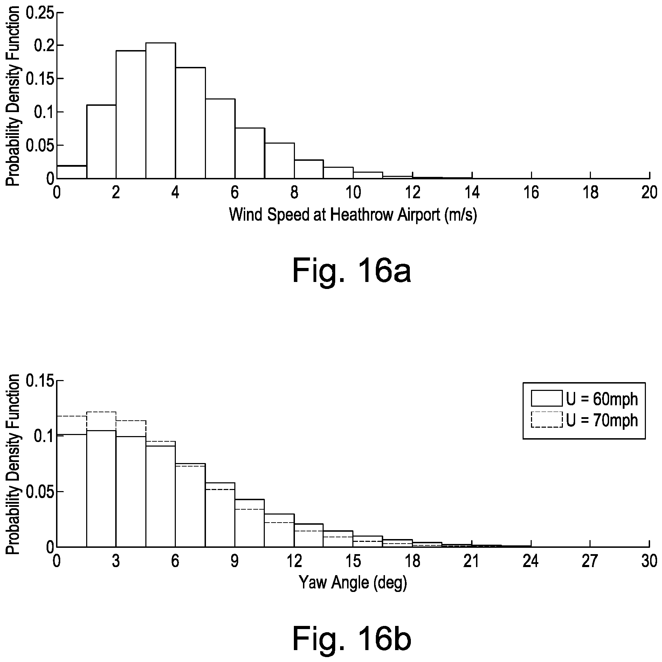

The standard vehicle operation happens within a windy environment. As an example, Figure 16a presents the probability density function of the wind speed at Heathrow airport. Other areas of the UK, EU and USA present wind distributions similar enough to consider the case presented of general relevance.

Figure 16b presents the probability distribution of the yaw angle of a vehicle driving at two speeds (60 and 70 mph) within an environment characterized by the wind distribution presented in Figure 16a considered uniformly distributed over all directions. Even if the wind distribution in general is not axisymmetric, the angle range of the wind rose and the approximately uniform distribution of road directions make this assumption fair. As observed, the distribution of yaw angle is almost uniform up to 6° and relevant up to 12°. In this analysis, the range 0° to 9° is considered, which, according to the figure, happens around 80% of the time.

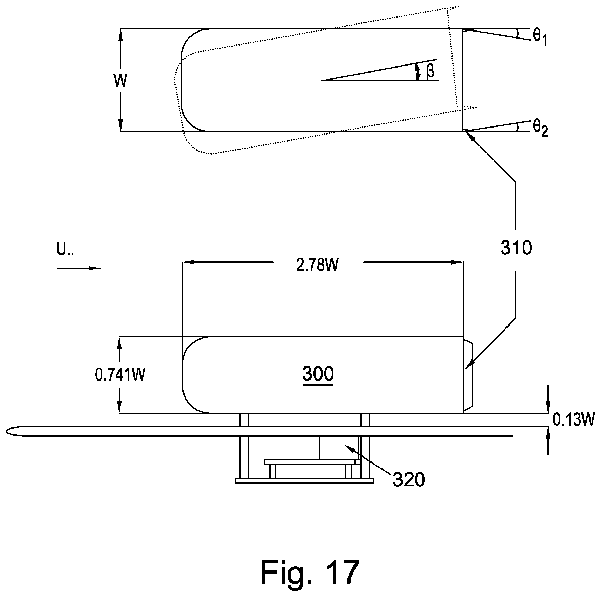

To study the effect of such environmental conditions, an Ahmed body 300 (general road vehicle model used in aerodynamic experiments) as illustrated in Figure 17 was tested in a wind tunnel at 35 m/s without flaps (baseline) and with rear lateral flaps/control surfaces 310. The flaps/control surfaces 310 were located at the rear of the body 300 and disposed at the lateral edges of the body 300. Two flap/control surface 310 lengths were tested which, when installed, had a length of 9% or 13% of the body 300 width W. The body 300 was supported on a force balance 320. The yaw angle of the body, β, was positioned at 0°, 3°, 6° or 9° performing a parametric study of the flap angle, θ1 and θ2 at each yaw condition.

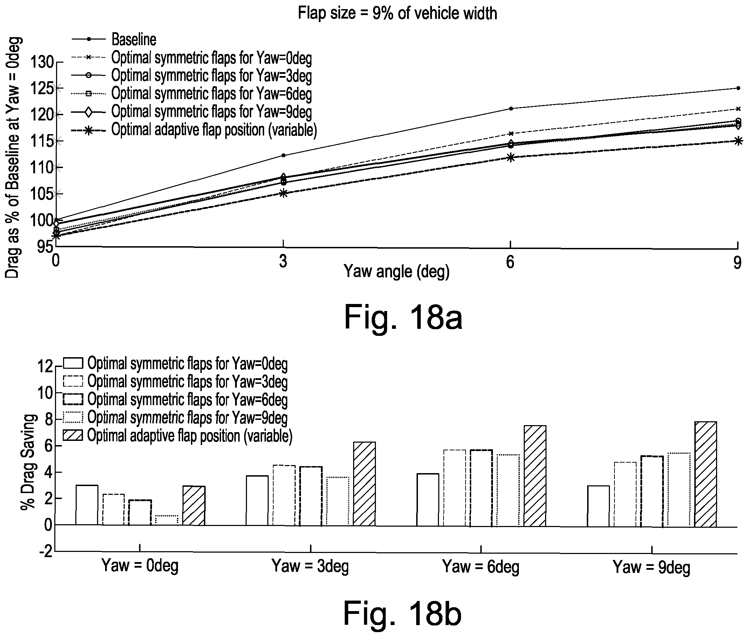

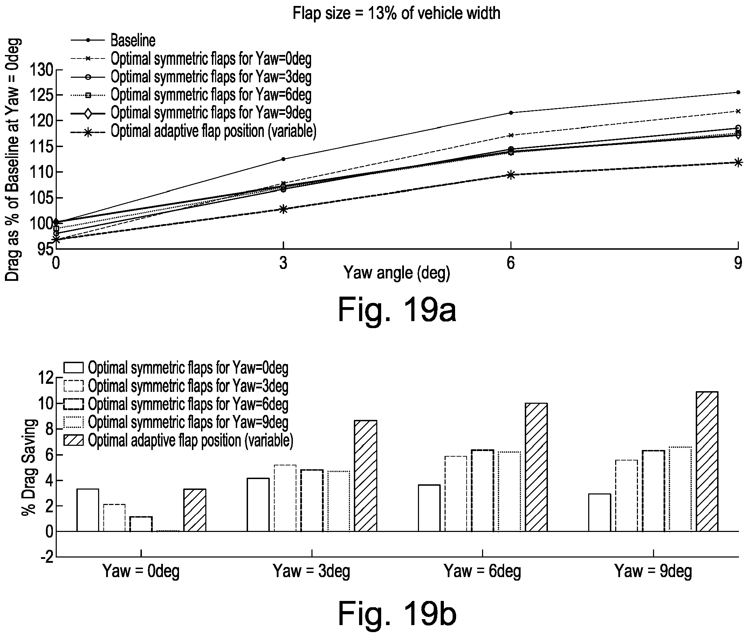

The main results of this experiment are summarized in Figure 18, Figure 19 and Figure 20. Figure 18a and Figure 19a present the drag of the (no-flap) baseline and the drag of the body using different flap/control surface 310 positioning at the four yaw angles tested, as a percentage of the baseline at β=0°, for flap lengths 9% and 13% of the body width respectively. The flap 310 configurations selected in each case are those symmetric (θ1 = θ2) flap positions that maximize the drag reduction at the yaw angles tested, and the flap positioning (in general asymmetric) that maximizes the drag reduction at each particular yaw angle. This last optimal flap positioning is different at each yaw angle.

Figure 18b and Figure 19b present the same results as Figure 18a and Figure 19a as the drag saving with respect to the no-flap baseline at each yaw angle. As observed, except for the configuration aligned with the flow (for which the increment of drag saving produced by the bistabilty control described elsewhere can be as large as 2%), the asymmetric flap configuration consistently produces a relevant increase in drag reduction with respect to each optimal symmetric flap configuration.

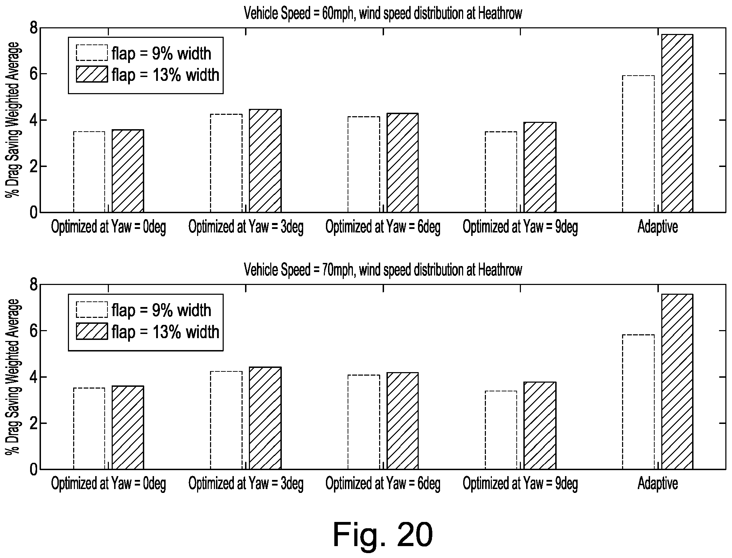

Moreover, a non-adaptive system cannot optimize the symmetric configuration of the flaps 310 at each yaw angle. That is to say, any given static optimum angle identified will only be optimal for a particular yaw angle. As such, a more realistic comparison for an adaptive system against a static system is to look at the average of savings achieved weighted with the yaw distribution presented in Figure 16b. This is illustrated in Figure 20. In this figure, a weighted average of the different flap positioning strategies for the vehicle speeds 60mph and 70mph and the two flap lengths considered are presented. As observed, the adaptive solution provides a drag reduction 40% to 70% larger than the best symmetric static positioning strategy, depending on the flap length and yaw angle distribution expected. This data clearly indicates the benefits of adaptive systems. These can react to variations in environmental conditions and can provide significantly larger drag reductions than static systems such as the boat-tails currently commercialized, for typical wind distributions and vehicle velocities.

The application disclosed herein refers to front and rear surfaces of the bluff body. These terms are intended to refer to the nominal "front" and "rear" of the body with respect to the general flow of fluid over the body. Typically, the flow of fluid over the body will be from the front of the body to the rear. However, it will be appreciated that the direction of fluid flow may vary with respect to the body. Therefore the term "rear" is intended to refer to the end of the object where the wake is formed due to fluid flow.

Where the bluff body is a vehicle, the "front" side or end of the body refers to the end of the vehicle that faces the direction of travel during forward travel of the vehicle and the "rear" side or end refers to the end of the vehicle opposing the direction of travel during forward travel.

Each control surface is a flap-like surface that may be elongate and may be able to direct fluid flow across its surface. In some arrangements, each control surface may be located at the rear of the bluff body. For example, each control surface may be positioned on the side of a rear surface of the body or on the side of the body towards the rear of the body.

The described methods and control algorithms may generally be implemented by a computer program. The computer program may be in the form of computer-executable instructions or code arranged to instruct or cause a computer or processor to perform one or more functions of the described methods. The computer program may be provided to an apparatus, such as a computer, on a computer readable medium or computer program product. The computer readable medium or computer program product may comprise non-transitory media such as semiconductor or solid state memory, magnetic tape, a removable computer memory stick or diskette, a random access memory (RAM), a read-only memory (ROM), a rigid magnetic disc, and an optical disk, such as a CD-ROM, CD-R/W, DVD or Blu-ray. The computer readable medium or computer program product may comprise a transmission signal. An apparatus or device such as a computer may be configured to perform one or more functions of the described methods.

It should be noted that the term "comprising" does not exclude other elements or steps, the term "a" or "an" does not exclude a plurality, a single feature may fulfil the functions of several features recited in the claims and reference signs in the claims shall not be construed as limiting the scope of the claims. It should also be noted that the Figures are not necessarily to scale; emphasis instead generally being placed upon illustrating the principles of the present disclosure.

**Claims**

1. A drag reduction apparatus for reducing the aerodynamic drag on a bluff body (200) with a blunt trailing edge (210) caused by fluid flow characteristics at the wake of the bluff body, **characterised in that** the drag reduction apparatus comprises:

    one or more control surfaces (120) configured to be coupled to the bluff body and configured to oscillate with respect to the bluff body, whereby the oscillation of the one or more control surfaces controls fluid flow at the wake of the bluff body to reduce the drag caused by fluid flow instabilities and environmental asymmetries; and

    a processor configured to execute a control algorithm so as to generate at least one control signal for controlling the oscillation of the one or more control surfaces, wherein each control signal comprises:

    a first signal component having at least one frequency component to control oscillation of the at least one control surface with respect to the bluff body; and
    a second signal component configured to control the mean position of the at least one control surface with respect to the bluff body during oscillation.

2. A drag reduction apparatus according to claim 1, further comprising one or more actuators (130) configured to cause the one or more control surfaces to oscillate with respect to the bluff body.

3. A drag reduction apparatus according to any preceding claim, wherein the processor is configured to generate a first control signal and a second control signal, wherein the first control signal and the second control signal are different, and wherein the first control signal is configured to control the oscillation of a first control surface and the second control signal is configured to control the oscillation of a second control surface.

4. A drag reduction apparatus according to any preceding claim, wherein the drag reduction apparatus further comprises at least one sensor (140) configured to detect an environmental parameter, and wherein the control algorithm is configured to generate the at least one control signal based upon an output of the at least one sensor.

5. A drag reduction apparatus according to claim 4, wherein the at least one sensor comprises a pressure sensor configured to determine pressure at the wake of the bluff body.

6. A drag reduction apparatus according to claim 4 or 5, wherein the at least one sensor comprises at least one of: a sensor configured to determine the relative position of the at least one control surface, a sensor configured to measure the aerodynamic force on the at least one control surface, and a sensor configured to measure the drag experienced by the bluff body.

**7.** A drag reduction apparatus according to any preceding claim, wherein the bluff body is a road vehicle.

**8.** A vehicle comprising the drag reduction apparatus of any preceding claim.

**9.** A drag reduction method for reducing the aerodynamic drag on a bluff body (200) with a blunt trailing edge (210) caused by fluid flow characteristics at the wake of the bluff body, the drag reduction method comprising:

coupling one or more control surfaces (120) to the bluff body, the one or more control surfaces configured to oscillate with respect to the bluff body; and
oscillating the one or more control surfaces with respect to the bluff body, whereby the oscillation of the one or more control surfaces controls fluid flow at the wake of the bluff body to reduce the drag caused by fluid flow instabilities and environmental asymmetries;
wherein oscillating the one or more control surfaces comprises executing a control algorithm using a processor to generate at least one control signal for controlling one or more actuators (130) configured to cause the one more or more control surfaces to oscillate to control fluid flow, wherein each control signal comprises:

a first signal component having at least one frequency component to control oscillation of the at least one control surface with respect to the bluff body; and
a second signal component configured to control the mean position of the at least one control surface with respect to the bluff body during oscillation.

**10.** A drag reduction method according claim 9, further comprising:

detecting an environmental parameter using at least one sensor, and
generating, using the control algorithm, the at least one control signal based upon an output of the at least one sensor.

**11.** A drag reduction method according to any of claims 9 to 10, wherein the bluff body is a road vehicle.

**12.** A drag reduction method according to claim 11, wherein the method further comprises oscillating a plurality of control surfaces, each coupled to the vehicle at a rear of the vehicle so as to control the fluid flow at the wake of the vehicle.

**13.** A computer-readable medium comprising computer-readable instructions which, when executed by a processor, cause the processor to perform the method of any of claims 9 to 12.

**Patentansprüche**

**1.** Strömungswiderstandreduzierungseinrichtung zum Reduzieren des aerodynamischen Strömungswiderstands an einem stumpfen Körper (200) mit einer abgestumpften Hinterkante (210), der durch Fluidströmungscharakteristiken am Nachlauf des stumpfen Körpers verursacht ist, **dadurch gekennzeichnet, dass** die Strömungswiderstandreduzierungseinrichtung umfasst:

eine oder mehrere Steuerflächen (120), die ausgestaltet sind, mit dem stumpfen Körper gekoppelt zu sein, und ausgestaltet sind, in Bezug auf den stumpfen Körper zu oszillieren, wobei die Oszillation der einen oder mehreren Steuerflächen eine Fluidströmung am Nachlauf des stumpfen Körpers steuert, um den durch Fluidströmungsinstabilitäten und umgebungsbedingte Ungleichgewichte verursachten Strömungswiderstand zu reduzieren; und
einen Prozessor, der ausgestaltet ist, einen Steueralgorithmus auszuführen, um mindestens ein Steuersignal zum Steuern der Oszillation der einen oder mehreren Steuerflächen zu erzeugen, wobei jedes Steuersignal umfasst:

eine erste Signalkomponente mit mindestens einer Frequenzkomponente zum Steuern einer Oszillation der mindestens einen Steuerfläche in Bezug auf den stumpfen Körper; und
eine zweite Signalkomponente, die ausgestaltet ist, die mittlere Position der mindestens einen Steuerfläche in Bezug auf den stumpfen Körper während einer Oszillation zu steuern.

**2.** Strömungswiderstandreduzierungseinrichtung nach Anspruch 1, ferner umfassend einen oder mehrere Aktuatoren (130), die ausgestaltet sind, ein Oszillieren der einen oder mehreren Steuerflächen in Bezug auf den stumpfen Körper zu bewirken.

**3.** Strömungswiderstandreduzierungseinrichtung nach einem der vorhergehenden Ansprüche, wobei der Prozessor ausgestaltet ist, ein erstes Steuersignal und ein zweites Steuersignal zu erzeugen, wobei das erste Steuersignal und das zweite Steuersignal unterschiedlich sind, und wobei das erste Steuersignal ausgestaltet ist, die Oszillation einer ersten Steuerfläche zu steuern und das zweite Steuersignal ausgestaltet ist, die Oszillation einer zweiten Steuerfläche zu steuern.

4. Strömungswiderstandreduzierungseinrichtung nach einem der vorhergehenden Ansprüche, wobei die Strömungswiderstandreduzierungseinrichtung ferner mindestens einen Sensor (140) umfasst, der ausgestaltet ist, einen Umgebungsparameter zu detektieren, und wobei der Steueralgorithmus ausgestaltet ist, das mindestens eine Steuersignal basierend auf einer Ausgabe des mindestens einen Sensors zu erzeugen.

5. Strömungswiderstandreduzierungseinrichtung nach Anspruch 4, wobei der mindestens eine Sensor einen Drucksensor umfasst, der ausgestaltet ist, einen Druck am Nachlauf des stumpfen Körpers zu bestimmen.

6. Strömungswiderstandreduzierungseinrichtung nach Anspruch 4 oder 5, wobei der mindestens eine Sensor mindestens eines von Folgendem umfasst: einen Sensor, der ausgestaltet ist, die relative Position der mindestens einen Steuerfläche zu bestimmen, einen Sensor, der ausgestaltet ist, die aerodynamische Kraft an der mindestens einen Steuerfläche zu messen, und einen Sensor, der ausgestaltet ist, den auf den stumpfen Körper wirkenden Strömungswiderstand zu messen.

7. Strömungswiderstandreduzierungseinrichtung nach einem der vorhergehenden Ansprüche, wobei der stumpfe Körper ein Straßenfahrzeug ist.

8. Fahrzeug umfassend die Strömungswiderstandreduzierungseinrichtung nach einem der vorhergehenden Ansprüche.

9. Strömungswiderstandreduzierungsverfahren zum Reduzieren des aerodynamischen Strömungswiderstands an einem stumpfen Körper (200) mit einer abgestumpften Hinterkante (210), der durch Fluidströmungscharakteristiken am Nachlauf des stumpfen Körpers verursacht ist, wobei das Strömungswiderstandreduzierungsverfahren umfasst:

Koppeln einer oder mehrerer Steuerflächen (120) mit dem stumpfen Körper, wobei die eine oder mehreren Steuerflächen ausgestaltet sind, in Bezug auf den stumpfen Körper zu oszillieren; und
Oszillieren der einen oder mehreren Steuerflächen in Bezug auf den stumpfen Körper, wobei die Oszillation der einen oder mehreren Steuerflächen eine Fluidströmung am Nachlauf des stumpfen Körpers steuert, um den durch Fluidströmungsinstabilitäten und umgebungsbedingte Ungleichgewichte verursachten Strömungswiderstand zu reduzieren;

wobei das Oszillieren der einen oder mehreren Steuerflächen Ausführen eines Steueralgorithmus unter Verwenden eines Prozessors umfasst, um mindestens ein Steuersignal zum Steuern eines oder mehrerer Aktuatoren (130) zu erzeugen, das ausgestaltet ist, ein Oszillieren der einen oder mehreren Steuerflächen zum Steuern einer Fluidströmung zu bewirken, wobei jedes Steuersignal umfasst:

eine erste Signalkomponente mit mindestens einer Frequenzkomponente zum Steuern einer Oszillation der mindestens einen Steuerfläche in Bezug auf den stumpfen Körper; und
eine zweite Signalkomponente, die ausgestaltet ist, die mittlere Position der mindestens einen Steuerfläche in Bezug auf den stumpfen Körper während einer Oszillation zu steuern.

10. Strömungswiderstandreduzierungsverfahren nach Anspruch 9, ferner umfassend:

Detektieren eines Umgebungsparameters unter Verwenden mindestens eines Sensors, und
Erzeugen, unter Verwenden des Steueralgorithmus, des mindestens einen Steuersignals basierend auf einer Ausgabe des mindestens einen Sensors.

11. Strömungswiderstandreduzierungsverfahren nach einem der Ansprüche 9 bis 10, wobei der stumpfe Körper ein Straßenfahrzeug ist.

12. Strömungswiderstandreduzierungsverfahren nach Anspruch 11, wobei das Verfahren ferner Oszillieren mehrerer Steuerflächen umfasst, die jeweils mit dem Fahrzeug an einem Heck des Fahrzeugs gekoppelt sind, um die Fluidströmung am Nachlauf des Fahrzeugs zu steuern.

13. Computerlesbares Medium umfassend computerlesbare Anweisungen, die, wenn sie durch einen Prozessor ausgeführt werden, den Prozessor veranlassen, das Verfahren nach einem der Ansprüche 9 bis 12 durchzuführen.

## Revendications

1. Appareil de réduction de traînée pour réduire la traînée aérodynamique sur un corps non profilé (200) ayant un bord de fuite émoussé (210) provoquée par les caractéristiques d'écoulement de fluide dans le sillage du corps non profilé, **caractérisé en ce que** l'appareil de réduction de traînée comprend :

au moins une surface de commande (120) conçue pour être accouplée au corps non profilé et conçue pour osciller par rapport au corps non profilé, moyennant quoi l'oscillation de l'au moins une surface de commande régule l'écoulement de fluide dans le sillage du corps non profilé pour réduire la traînée provoquée par les instabilités d'écoulement de fluide et les asymétries environnementales ; et

un processeur conçu pour exécuter un algorithme de commande de sorte à générer au moins un signal de commande pour commander l'oscillation de l'au moins une surface de commande, chaque signal de commande comprenant :

une première composante de signal ayant au moins une composante de fréquence pour commander l'oscillation de l'au moins une surface de commande par rapport au corps non profilé ; et

une seconde composante de signal conçue pour commander la position moyenne de l'au moins une surface de commande par rapport au corps non profilé pendant l'oscillation.

2. Appareil de réduction de traînée selon la revendication 1, comprenant en outre au moins un actionneur (130) conçu pour amener l'au moins une surface de commande à osciller par rapport au corps non profilé.

3. Appareil de réduction de traînée selon l'une quelconque des revendications précédentes, le processeur étant conçu pour générer un premier signal de commande et un second signal de commande, le premier signal de commande et le second signal de commande étant différents, et le premier signal de commande étant conçu pour commander l'oscillation d'une première surface de commande et le second signal de commande étant conçu pour commander l'oscillation d'une seconde surface de commande.

4. Appareil de réduction de traînée selon l'une quelconque des revendications précédentes, l'appareil de réduction de traînée comprenant en outre au moins un capteur (140) conçu pour détecter un paramètre environnemental, et l'algorithme de commande étant conçu pour générer l'au moins un signal de commande sur la base d'une sortie de l'au moins un capteur.

5. Appareil de réduction de traînée selon la revendication 4, l'au moins un capteur comprenant un capteur de pression conçu pour déterminer la pression dans le sillage du corps non profilé.

6. Appareil de réduction de traînée selon la revendication 4 ou 5, l'au moins un capteur comprenant au moins l'un des éléments suivants : un capteur conçu pour déterminer la position relative de l'au moins une surface de commande, un capteur conçu pour mesurer la force aérodynamique sur l'au moins une surface de commande, et un capteur conçu pour mesurer la traînée subie par le corps non profilé.

7. Appareil de réduction de traînée selon l'une quelconque des revendications précédentes, le corps non profilé étant un véhicule routier.

8. Véhicule comprenant l'appareil de réduction de traînée selon l'une quelconque des revendications précédentes.

9. Procédé de réduction de traînée pour réduire la traînée aérodynamique sur un corps non profilé (200) ayant un bord de fuite émoussé (210) provoquée par les caractéristiques d'écoulement de fluide dans le sillage du corps non profilé, le procédé de réduction de la traînée comprenant :

accouplement d'au moins une surface de commande (120) au corps non profilé, l'au moins une surface de commande étant conçue pour osciller par rapport au corps non profilé ; et oscillation de l'au moins une surface de commande par rapport au corps non profilé, moyennant quoi l'oscillation de l'au moins une surface de commande régule l'écoulement de fluide dans le sillage du corps non profilé pour réduire la traînée provoquée par les instabilités d'écoulement de fluide et les asymétries environnementales ; l'oscillation de l'au moins une surface de commande comprenant l'exécution d'un algorithme de commande à l'aide d'un processeur pour générer au moins un signal de commande pour commander au moins un actionneur (130) conçu pour amener l'au moins une surface de commande à osciller pour commander l'écoulement de fluide, chaque signal de commande comprenant :

une première composante de signal ayant au moins une composante de fréquence pour commander l'oscillation de l'au moins une surface de commande par rapport au corps non profilé ; et

une seconde composante de signal conçue pour commander la position moyenne de l'au moins une surface de commande par rapport au corps non profilé pendant l'oscillation.

10. Procédé de réduction de traînée selon la revendication 9, comprenant en outre :

détection d'un paramètre environnemental à l'aide d'au moins un capteur, et

génération, à l'aide de l'algorithme de commande, d'au moins un signal de commande sur la base d'une sortie de l'au moins un capteur.

**11.** Procédé de réduction de traînée selon l'une quelconque des revendications 9 et 10, le corps non profilé étant un véhicule routier.

**12.** Procédé de réduction de traînée selon la revendication 11, le procédé comprenant en outre l'oscillation d'une pluralité de surfaces de commande, chacune étant accouplée au véhicule à un arrière du véhicule de sorte à commander l'écoulement de fluide dans le sillage du véhicule.

**13.** Support lisible par ordinateur comprenant des instructions lisibles par ordinateur qui, lorsqu'elles sont exécutées par un processeur, amènent le processeur à effectuer le procédé selon l'une quelconque des revendications 9 à 12.

Fig. 1

Fig. 2a

Fig. 2b

**Fig. 3**

**Fig. 4a**

**Fig. 4b**

Fig. 5

Fig. 6

Fig. 7a

Fig. 7b

Fig. 7c

## Fig. 8

## Fig. 9

Δ$C_D$ for different yaw angles

Δ$C_D$ for different flap deflections
at yaw angle 2.5° and 10 *m/s*

## Fig. 10

Centre of pressure position for different flap deflections
at yaw angle 2.5° and 10 *m/s*

Centre of pressure position standard deviation for
different flap deflections at yaw angle 2.5° and 10 *m/s*

## Fig. 11

Fig. 12

Fig. 13

Fig. 14

Fig. 15

Fig. 16a

Fig. 16b

W

θ₁

β

θ₂

310

U..

2.78W

0.741W

300

0.13W

320

Fig. 17

Flap size = 9% of vehicle width

Fig. 18a

Fig. 18b

EP 3 368 397 B1

Flap size = 13% of vehicle width

## Fig. 19a

## Fig. 19b

Fig. 20

**EP 3 368 397 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 20040025022
- US 20100106380 A1